# EUROPÄISCHE PATENTSCHRIFT

(11) **EP 0 673 981 B1**
(45) Veröffentlichungstag und Bekanntmachung des Hinweises auf die Patenterteilung: **05.08.1998**
(21) Anmeldenummer: 95101960.3
(22) Anmeldetag: 14.02.1995
(51) Int. Cl.: C09D 123/28, C09D 163/00, C08J 7/04

(54) **Wässrige einkomponentige Überzugsmittel und deren Verwendung in Verfahren zur Reparaturlackierung von Kunststoffsubstraten**
Aqueous one-component coatings and their use as a refinish paint for plastic substrates
Revêtements aqueux à un constituant et leur utilisation comme peinture de retouche pour des substrats ou matière plastique

(30) Priorität: 18.02.1994 DE 4405148
(43) Veröffentlichungstag der Anmeldung: 27.09.1995
(73) Patentinhaber: Herberts Gesellschaft mit beschränkter Haftung, 42285 Wuppertal (DE)
(72) Erfinder: Schreiber, Peter, Dr., D-45529 Hattingen (DE); Hellmann, Udo, D-42879 Remscheid (DE); Stephan, Werner, D-42111 Wuppertal (DE); Prescher, Michael, Dr., D-42111 Wuppertal (DE)
(74) Vertreter: Türk, Gille, Hrabal, Leifert

(56) Entgegenhaltungen:
- EP-A- 0 272 595
- EP-A- 0 466 136
- US-A- 4 981 730
- PATENT ABSTRACTS OF JAPAN vol. 4, no. 16 (C-072) 7. Februar 1980 & JP-A-54 153 832 (OSAKA SODA) 4. Dezember 1979

## Beschreibung

Die Erfindung betrifft wäßrige einkomponentige Überzugsmittel auf der Basis von Epoxidharzen und chlorierten Polyolefinen, welche insbesondere als Haftgrundierung zum Beschichten von Kunststoffsubstraten geeignet sind.

Es ist bekannt, auch bei der Beschichtung von Kunststoffoberflächen im Sinne einer umweltorientierten Arbeitsweise wäßrige Überzugsmittel einzusetzen. Ebenso ist bekannt, in derartigen Überzugsmitteln als Haftvermittler chlorierte Polyolefine (CPO) einzusetzen, um die Haftung auf der Kunststoffoberfläche zu verbessern.

In der EP-A-539 710 werden beispielsweise wäßrige Überzugsmittel beschrieben, die chlorierte Polyolefine, filmbildende Bindemittel, Lösemittel, Wasser, Pigmente und/oder Füllstoffe enthalten. Um die chlorierten Polyolefine in das wäßrige Überzugsmittel einzuarbeiten, müssen Emulgatoren eingesetzt werden. Als Bindemittel werden wasserdispergierbare Polyurethanharze mit einem zahlenmittleren Molekulargewicht (Mn) von 500 - 500000 beschrieben.

Aus der DE-A-39 10 901 sind wäßrige Beschichtungszusammensetzungen für Kunststoffteile bekannt, die Wasser, ein filmbildendes Bindemittelsystem, eine wäßrige Dispersion chlorierter Polyolefine, gegebenenfalls Pigmente und Additive und einen anionischen Emulgator enthalten. Als filmbildende Bindemittel werden Acrylat-, Alkyd- und Polyurethanharze genannt. Die wäßrige Dispersion chlorierter Polyolefine muß sehr aufwendig nach einem Schmelzverfahren und dem Verfahrensschritt einer azeotropen Destillation aller organischen Lösemittelbestandteile hergestellt werden.

In der noch nicht veröffentlichten deutschen Patentanmeldung P 42 29 981 werden zweikomponentige wäßrige Überzugsmittel auf Epoxid/Amin-Basis zur Kunststoffbeschichtung beschrieben. Diese Überzugsmittel enthalten neben Epoxidharzen, Polyaminhärtern und gegebenenfalls Pigmenten und Füllstoffen eine wäßrige Emulsion, bestehend aus Epoxidharz, organischem Lösemittel, Wasser und chloriertem Polyolefin. Im Überzugsmittel können weitere Bindemittel, bevorzugt Polyurethanharze, enthalten sein.

Die genannten wäßrigen Überzugsmittel zeigen gute Haftung auf relativ polaren Kunststoffoberflächen, wie z.B. Polyurethan, PVC, UP-GF (ungesättigte Polyester-glasfaserverstärkt). Auf relativ unpolaren Polyolefinsubstraten, z.B. Polypropylen, EPDM (Ethylen-Propylen-Dien-Mischpolymerisate) gibt es Haftungsprobleme. Hier ist vor dem Beschichten eine Vorbehandlung der Kunststoffoberfläche z.B. durch Beflammen oder Plasmabehandlung erforderlich, um ihr eine entsprechende Oberflächenpolarität zu verleihen.

In der DE-A-42 26 968 wird eine Grundierungszusammensetzung zum Beschichten von Polyolefinsubstraten beschrieben, bei deren Verwendung eine Vorbehandlung des Substrats unterbleiben kann. Es handelt sich hierbei allerdings um ein nicht-wäßriges Überzugsmittel auf Basis eines Epoxidharzes mit einem wasserlöslichen Anteil von maximal 50 %. Außerdem enthält die Zusammensetzung einen sehr hohen Anteil eines chlorierten Polyolefinharzes (100 Gewichtsteile CPO, 1 - 70 Gewichtsteile Epoxidharz). Die Zusammensetzungen ergeben eine schlechte Filmbildung.

Aufgabe der vorliegenden Erfindung ist daher die Bereitstellung von wäßrigen Überzugsmitteln, die zum Beschichten von Kunststoffsubstraten, insbesondere für Reparaturlackierungen, z.B. in der Fahrzeugreparaturlackierung, geeignet sind, wobei die Überzugsmittel eine universelle Haftung auch auf unvorbehandelten, insbesondere unpolaren Kunststoffteilen zeigen und mit anderen Grundierungen gut überarbeitbar sein sollen.

Diese Aufgabe wird gelöst durch wäßrige, einkomponentige, vorzugsweise emulgatorfreie Überzugsmittel, enthaltend
A) 1 bis 40 Gew.-% eines oder mehrerer wasserverdünnbarer selbstemulgierender Epoxidharze mit einem Epoxidäquivalentgewicht zwischen 250 und 10000, welche erhältlich sind durch Kondensation von
   a) 50 bis 80 Gew.-% einer oder mehrerer Epoxidverbindungen mit im Mittel mindestens 2 Epoxidgruppen pro Molekül und einem Epoxidäquivalentgewicht von 100 bis 2000
   b) 17 bis 35 Gew.-% eines oder mehrerer aromatischer Polyole und
   c) 3 bis 15 Gew.-% eines Kondensationsproduktes aus einem oder mehreren aliphatischen Polyolen mit einem gewichtsmittleren Molgewicht (Mw) von 200 bis 20000 und einer oder mehreren Epoxidverbindungen mit im Mittel mindestens 2 Epoxidgruppen pro Molekül und einem Epoxidäquivalentgewicht von 100 bis 2000, wobei das Äquivalentverhältnis der OH-Gruppen zu den Epoxidgruppen 1 : 0,85 bis 1 : 1,5, vorzugsweise 1 : 0,95 bis 1 : 1,20 beträgt und das Epoxidäquivalentgewicht dieses Kondensationsproduktes bei mindestens 50000, vorzugsweise bei mindestens 100000 liegt,
B) ein oder mehrere chlorierte Polyolefine (CPO) im Gewichtsverhältnis Epoxidharz : CPO von 10 : 0,5 bis 10 : 4,5, jeweils bezogen auf das Harzfestkörpergewicht,
C) 40 bis 90 Gew.-% Wasser,
D) 3 bis 30 Gew.-% eines oder mehrerer organischer Lösemittel und gegebenenfalls
E) Pigmente, Füllstoffe und übliche lacktechnische Additive,
wobei sich die Gewichtsprozent von A), C) und D) auf das Gewicht des gesamten wäßrigen Überzugsmittels beziehen und die Überzugsmittel frei von Vernetzern, insbesondere frei von Polyaminhärtern sind.

Das selbstemulgierende Epoxidharz der Komponente A) besitzt vorzugsweise Epoxidäquivalentgewichte von 350 bis 2500, insbesondere von 450 bis 1500.

Dieses Epoxidharz ist in EP-A-272 595 beschrieben.

Bei den Epoxidverbindungen der Komponente A (a), und zur Herstellung der Komponente A (c) handelt es sich insbesondere um 1,2-Epoxidverbindungen. Es handelt sich dabei um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten und Ethergruppierungen.

Vorzugsweise handelt es sich bei diesen Epoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 160 und 500, insbesondere zwischen 170 und 250. Als mehrwertige Phenole sind beispielsweise zu nennen: Resorcin, Hydrochinon, 2,2-Bis-(4-hydroxyphenyl)-propan(Bisphenol A), Isomerengemische des Dihydroxydiphenylmethans (Bisphenol F), Tetrabrombisphenol A, 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenol, Bis-(4-hydroxyphenyl)-1,1-ethan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan und Bis-(4-hydroxyphenyl)-ether, Bis-(4-hydroxyphenyl)-sulfon, sowie die Chlorierungs- und Bromierungsprodukte der vorstehend genannten Verbindungen. Bisphenol A ist hierbei besonders bevorzugt.

Auch die Polyglycidylether von mehrwertigen Alkoholen sind geeignet. Als Beispiele derartiger mehrwertiger Alkohole seien Ethylenglykol, Diethylenglykol, Triethylenglykol, 1,2-Prpoylenglykol, Polyoxypropylenglykole (n = 1 bis 10), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäureglycidylester und Hexahydrophthalsäurediglycidylester.

Eine ausführliche Aufzählung der geeigneten Epoxidverbindungen findet sich in dem Handbuch "Epoxidverbindungen und Epoxidharze" von A. M. Paquin, Springer Verlag, Berlin 1958, Kapitel IV und in Lee, Neville "Handbook of Epoxy Resins", 1967, Chapter 2. Es können auch Mischungen von mehreren Epoxidverbindungen verwendet werden.

Als aromatische Polyole entsprechend A(b), kommen vorzugsweise die aromatischen OH-gruppenhaltigen Verbindungen in Frage wie vorstehend bei den Komponenten A(a) und A(c) beschrieben, also mehrwertige, vorzugsweise zweiwertige Phenole, deren Chlorierungs-, Bromierungsprodukte und/oder Novolacke. Besonders bevorzugt ist auch hier Bisphenol A.

Bevorzugte Kondensationsprodukte A(c) sind solche aus den vorstehend beschriebenen Epoxidverbindungen, insbesondere Polyglycidylether von Bisphenolen, mit aliphatischen Polyolen, wobei das Epoxidäquivalentgewicht dieser Kondensationsprodukte mindestens 50000, vorzugsweise mindestens 100000 beträgt und insbesondere zwischen 100000 und 400000 liegt. Bei den aliphatischen Polyolen handelt es sich vorzugsweise um Polyetherpolyole (Polyalkylenglykole) mit gewichtsmittleren Molekulargewichten (Mw) von bevorzugt 600 bis 12000, insbesondere 2000 bis 8000 und OH-Zahlen zweckmäßigerweise von 10 bis 200, bevorzugt 20 bis 60. Diese Polyetherpolyole besitzen vorzugsweise nur endständige, primäre OH-Gruppen. Beispielsweise seien hier Blockcopolymere aus Äthylenoxid und Propylenoxid sowie Polyäthylen-, Polypropylen-, Polybutylenglykole genannt, wobei auch Gemische der jeweiligen Polyalkylenglykole eingesetzt werden können. Vorzugsweise werden Polyethylenglykole eingesetzt.

Die Kondensationsprodukte A(c) können z.B. durch Kondensation der genannten Polyetherpolyole mit den Glycidylethern in Gegenwart spezifischer Katalysatoren bei erhöhter Temperatur, im allgemeinen bei 50 bis 200, vorzugsweise 90 bis 150°C, gewonnen werden. Die beiden Komponenten werden dabei in solchen Mengen eingesetzt, daß das Äquivalentverhältnis von OH-Gruppen zu Epoxidgruppen, vorzugsweise 1 : 0,95 bis 1 : 1,20 beträgt. Geeignete Katalysatoren hierfür sind z.B. Bortrifluorid und seine Komplexe, z.B. mit Wasser, mit Phosphorsäure, Essigsäure (1 : 1 und 1 : 2), Methanol, Diäthylether, Tetrahydrofuran, Phenol, Trikresylphosphat, Ethylenglykolmonoethylether, Polyethylenglykol (MG 200), Dimethylsulfoxid, Di-n-butylether, Di-n-hexylether und Bernsteinsäure; ferner mit Aminen, wie z.B. mit Monoethylamin oder Benzylamin. Es eignen sich jedoch auch Lewis-Säuren auf anderer Basis, wie SnCl₄. Bevorzugt werden BF₃-Diethylether und BF₃-Essigsäure eingesetzt. Die Menge an Katalysator beträgt beispielsweise 0,1 bis 5, vorzugsweise 0,15 bis 1 Gew.-%, bezogen auf das Reaktionsgemisch. Zur besseren Dosierung kann der Katalysator in einem Lösemittel wie z.B. Diethylether, einem Glykol- oder cyclischen Ether oder Ketonen, vorzugsweise Dioxan oder Methylisobutylketon z.B. bis zu 0,5 bis 20, vorzugsweise 2,5 bis 12,5 Gew.-% verdünnt werden.

Die Menge an Kondensationsprodukt A(c) im selbstemulgierenden Epoxidharz beträgt im allgemeinen etwa 3 bis 15 Gew.-%, vorzugsweise 4 bis 9 Gew.-%, bezogen auf das selbstemulgierende Epoxidharz.

Das selbstemulgierende Epoxidharz kann in Form einer wäßrigen Epoxidharzdispersion eingesetzt werden. Dazu wird zunächst das selbstemulgierbare Epoxidharz durch Kondensation der 3 Komponenten a), b) und c) bei erhöhten Temperaturen in Gegenwart eines Kondensationskatalysators und gegebenenfalls Lösemittel hergestellt. Anschließend werden gegebenenfalls weitere organische Lösemittel und zu der so erhaltenen Lösung entsprechende Mengen Wasser unter kräftigem Rühren zugegeben, beispielsweise bei 30 bis 100°C.

Die Menge an Wasser in der wäßrigen Dispersion liegt bei etwa 30 bis 55 Gew.-%, vorzugsweise bei etwa 35 bis 50 Gew.-%, bezogen auf die Gesamtdispersion. Als organische Lösemittel, welche 0 bis 15 Gew.-%, beispielsweise 4 bis 15 Gew.-%, bezogen auf die Gesamtdispersion, enthalten sein können, kommen beispielsweise Ethylenglykol-Mono- bzw. -Diether, Propylenglykol-Mono- bzw. Diether, Butylenglykol-Mono- bzw. Diether von Monoalkoholen mit einem gegebenenfalls verzweigten Alkylrest von 1 bis 6 Kohlenstoffatomen, aliphatische Alkohole mit gegebenenfalls verzweigten Alkylrestern mit 1 bis 12 Kohlenstoffatomen, araliphatische und cycloaliphatische Alkohole, wie Benzylalkohol oder Cyclohexanol, Aromaten wie Xylol oder Ketone, wie Methylisobutylketon in Betracht, wobei die Lösemittel einzeln oder im Gemisch eingesetzt werden können. Bevorzugt sind Ethylglykol, Methylglykol, Methoxypropanol, Ethoxypropanol und/oder Benzylalkohol. Die Epoxidharzdispersion enthält vorzugsweise etwa 4 - 10 Gew.-% organische Lösemittel.

Die mittlere Teilchengröße des dispergierten Epoxidharzes in der Dispersion ist in der Regel nicht höher als 1,0 µm und beträgt vorzugsweise 0,3 bis 0,8 µm. Der Anteil des Epoxidharzes in der Dispersion beträgt beispielsweise 20 - 70 Gew.-%, vorzugsweise etwa 25 - 55 Gew.-%.

Die erfindungsgemäßen Überzugsmittel enthalten insgesamt 40 bis 90 Gew.-% Wasser (Komponente C) und 3 bis 30 Gew.-% organischer Lösemittel (Komponente D), bezogen auf das gesamte Überzugsmittel. Dabei handelt es sich bevorzugt um solche Lösemittel, wie sie zur Herstellung der wäßrigen Epoxidharzdispersion vorstehend beispielhaft genannt wurden.

Weiterhin sind im erfindungsgemäßen Überzugsmittel ein oder mehrere chlorierte Polyolefinharze (Komponente B) im Gewichtsverhältnis Epoxidharz (fest) : chloriertes Polyolefin (fest) von 10 : 0,5 bis 10 : 4,5 enthalten.

Als chlorierte Polyolefine können beispielsweise handelsübliche Materialien eingesetzt werden. Es handelt sich insbesondere um chloriertes Polyethylen, chloriertes Polypropylen oder chlorierte Copolymere davon. Es können auch Mischungen solcher Polymerer eingesetzt werden. Sie haben bevorzugt einen Chlorierungsgrad von 15 - 45 Gew-%. Das Molekulargewicht der chlorierten Polyolefine (CPO) beträgt bevorzugt 700 bis 70000. Sie können als Pulver, als wäßrige Slurry oder bevorzugt als Lösung in organischen Lösemitteln vorliegen. Bevorzugt weisen die Lösemittel einen Siedebereich von 100 - 160°C auf. Als Lösemittel sind insbesondere Kohlenwasserstoffe, bevorzugt aromatische Kohlenwasserstoffe geeignet. Der Festkörpergehalt der bevorzugten CPO-Lösungen beträgt 20 bis 60 Gew.-%.

Desweiteren können die erfindungsgemäßen Überzugsmittel Pigmente, Füllstoffe und übliche lacktechnische Additive enthalten. Als Pigmente und/oder Füllstoffe können übliche Pigmente bzw. Füllstoffe auf organischer und anorganischer Basis zugesetzt werden. Beispiele hierfür sind Titandioxid, Aluminiumsilikat, Bariumsulfat, Siliciumdioxid. Lackübliche Additive sind beispielsweise Antischaummittel, Verlaufsmittel, Katalysatoren, Antikrater- und Netzmittel.

Bei den erfindungsgemäßen Überzugsmitteln handelt es sich um einkomponentige physikalisch trocknende Überzugsmittel. Sie sind lagerstabil und können gegebenenfalls nach Einstellen auf Spritzviskosität direkt auf entsprechende Substrate appliziert werden. Sie sind frei von Polyaminhärtern und frei von anderen Vernetzern.

Die erfindungsgemäßen Überzugsmittel können beispielsweise hergestellt werden, indem man zumindest ein wasserverdünnbares Epoxidharz mit mindestens einem chlorierten Polyolefin als Pulver, Slurry oder organische Lösung durch intensives Dispergieren mischt.

Dazu werden vollentsalztes Wasser und gegebenenfalls auch noch Anteile eines oder mehrerer Lösemittel, insbesondere aromatischer Lösemittel, zugegeben, um eine günstige Viskosität zum Dispergieren zu erzeugen.

Das Verdünnen kann einstufig, gegebenenfalls auch mehrstufig oder kontinuierlich erfolgen. Da im allgemeinen die Viskosität zum optimalen Dispergieren höher liegt als eine geeignete Lagerviskosität, ist ein stufenweiser Prozeß günstig. Zur Dispergierung geeignet sind übliche Dispergier- und Homogenisierungsaggregate, wie z.B. schnellaufende Rühraggregate, Rotor/Stator-Mischer, Hochdruck-Homogenisatoren oder Ultraschallhomogenisatoren. Zur Unterstützung des Dispergierens kann die Temperatur gegebenenfalls erhöht werden, beispielsweise auf bis zu 80°C.

Es werden stabile wäßrige Emulsionen erhalten. Der Einsatz von Emulgatoren ist nicht erforderlich. Bevorzugt sind die Emulsionen, bzw. die erfindungsgemäßen Überzugsmittel, emulgatorfrei. Zu diesen Emulsionen können weitere Epoxidharzanteile zugesetzt werden. Dabei kann es sich um die gleichen oder verschiedene Epoxidharze wie bei der Herstellung der CPO/Epoxidharz-Emulsion handeln.

Es können nun Pigmente, Füllstoffe und weitere Zusatzstoffe zugegeben werden. Die Pigmente und Füllstoffe werden mit den anderen Bestandteilen gut dispergiert, gegebenenfalls auch vermahlen. Das geschieht nach dem Fachmann geläufigen Verfahren. Gegebenenfalls werden die Pigmente und Füllstoffe in einem Netzmittel separat vermahlen.

Die erfindungsgemäßen Überzugsmittel sind stabile Dispersionen, die auch bei längerer Lagerung keine Sedimentation oder Phasentrennung zeigen.

Die erfindungsgemäßen Überzugsmittel können beispielsweise durch Streichen, Tauchen oder Spritzen appliziert werden. Nach dem Aufbringen auf das Substrat werden die Überzugsfilme getrocknet. Das kann bei Raumtemperatur oder bei erhöhten Temperaturen bis beispielsweise 80°C erfolgen. Dabei kann auf die Temperaturempfindlichkeit des Substrates abgestimmt werden.

Als Substrate dienen bevorzugt Kunststoffsubstrate. Beispiele dafür sind modifizierte oder nicht modifizierte Polyolefine, insbesondere Polyethylen- und Polypropylensubstrate, Polycarbonate, Polyamide, Polystyrole, Acrylnitril-Butadien-Styrol-Copolymere, Polyurethane oder Polyester. Die Kunststoffe können beispielsweise durch Glasfasern verstärkt werden.

Die erfindungsgemäßen Überzugsmittel finden insbesondere zum Beschichten von Kunststoffsubstraten in der Automobilindustrie Anwendung. Besonders geeignet sind sie als Haftgrundierungen, insbesondere für die Autoreparaturlackierung.

Mit den erfindungsgemäßen Überzugsmitteln werden Haftgrundierungsmittel bereitgestellt, die eine universelle gute Haftung auf den verschiedensten Kunststoffsubstraten aufweisen. Von besonderem Vorteil ist dabei die direkte sehr gute Eigenhaftung auch auf unvorbehandelten relativ unpolaren Kunststoffoberflächen.

Die erfindungsgemäßen Haftgrundierungsmittel zeigen ein gutes Standvermögen auch an senkrechten Flächen. Sie sind problemlos mit anderen Grundierungen überarbeitbar und können mit weiteren Überzugsmitteln im Mehrschichtaufbau überlackiert werden.

Die Erfindung soll an Hand der folgenden Beispiele erläutert werden.

### Beispiel 1

### Herstellung eines Epoxidharzes

### a) Herstellung des Kondensationsproduktes c)

150 g technisches Polyethylenglykol mit einem durchschnittlichen Molgewicht (Mw) von 3000 und 18,5 g eines Polyglycidylethers auf Basis von Bisphenol A mit einem Epoxidäquivalentgewicht von 185 wurden zusammen auf 100° erhitzt und unter Rühren mit 0,9 g BF-Etherat, mit Dioxan auf 5 Gew.-% verdünnt, versetzt. Dann wurde auf 130°C erhitzt und die Temperatur beibehalten bis die Reaktion ausgeklungen war, kenntlich an einer Zunahme des Epoxidäquivalentgewichtes. Das Äquivalentverhältnis OH : Epoxid betrug 1 : 1, das Epoxidäquivalentgewicht ca. 360000.

### b) Herstellung der Epoxidharzdispersion

In einem 2-Liter-Dreihalskolben, ausgerüstet mit Thermometer, Flügelrührer, Rückflußkühler und Tropfentrichter wurden 325 g eines Epoxidharzes auf Basis von Bisphenol A mit einem Epoxidäquivalent von 183 mit 98 g Bisphenol A und 27 g des Kondensationsproduktes la) in Gegenwart von 750 mg Triphenylphosphin bei 150°C - 160°C bis zu einem Epoxidäquivalent von 490 - 500 umgesetzt. Man verdünnte unter Abkühlung mit 27 g Benzylalkohol und 60 g Methoxypropanol. Unterhalb einer Temperatur von 100°C wurden bei einer Rührgeschwindigkeit von ca. 800 Umdrehungen pro Minute und Senkung der Temperatur auf 70 - 60°C in einem Zeitraum von 5 - 30 Minuten gleichmäßig 105 g deionisiertes Wasser zugesetzt, wobei eine wäßrige Dispersion entstand, die anschließend mit 173 g deionisierten Wasser weiter verdünnt wurde. Die Dispersion hatte einen Festgehalt von 55,7 Gew.-%, eine Viskosität von 11700 mPas (Brookfield, Spindel 3 bis 6 UpM) sowie eine Teilchengröße von 0,66 µm.

### Beispiel 2

### Herstellung einer Grundierung

3,6 Gew.-% einer handelsüblichen CPO-Lösung (40 % in Xylol, CPO 343-1) werden mit 2,4 Gew.-% Solvesso 100 gemischt und unter starkem Rühren zu 10,9 Gew.-% einer wäßrigen Epoxidharzdispersion entsprechend Beispiel 1 gegeben. Zu dieser Mischung werden unter Rühren zunächst 1,0 Gew.-% eines handelsüblichen Rheologiehilfsmittels (Montmorillonitbasis) und anschließend 82,1 Gew.-% vollentsalztes Wasser gegeben. Es wird 15 Minuten gerührt.

Die Angaben in Gew.-% sind auf das gesamte Überzugsmittel bezogen.

### Beispiele 3 bis 7

Entsprechend Beispiel 2 werden weitere Grundierungen mit unterschiedlichen Zusammensetzungen hergestellt. Die dabei eingesetzten Produktmengen sind in der folgenden Tabelle angegeben. Beispiel 7 ist ein Vergleichsversuch. Dem entsprechend Beispiel 7 hergestellten Überzugsmittel wird kurz vor der Applikation unter Rühren ein handelsüblicher wäßriger Aminhärter zugesetzt.

| Beispiel * | 3 | 4 | 5 | 6 | 7 (Vergleich) |
|---|---|---|---|---|---|
| Epoxidharzdispersion nach Beispiel 1 | 41,1 | 46,6 | 18,9 | 37,7 | 38,5 |
| CPO | 14,5 | 10,0 | 11,3 | 2,5 | 13,5 |
| Solvesso 100 | 8,9 | 3,3 | 4,8 | 10,0 | 8,3 |
| Rheologiehilfsmittel | 3,0 | 3,0 | 2,0 | 2,0 | 3,0 |
| vollentsalztes Wasser | 32,5 | 37,1 | 63,0 | 47,8 | 28,7 |
| Aminhärter | - | - | - | - | 8,0 |

| | | | | | |
|---|---|---|---|---|---|
| * Mengenangaben in Gew.-%, bezogen auf das gesamte Überzugsmittel | | | | | |

### Applikationsbeispiel

Die nach den Beispielen 2 - 7 hergestellten Grundierungen werden direkt auf verschiedene unvorbehandelte Kunststoffsubstrate (siehe Tabelle) appliziert. Anschließend wird 30 Minuten bei Raumtemperatur getrocknet. Die Eigenschaften der erhaltenen Lackierungen sind in der folgenden Tabelle dargestellt.

| Beispiel | 2 | 3 | 4 | 5 | 6 | 7(Vergleich) |
|---|---|---|---|---|---|---|
| Oberfläche | i.O. | i.O. | i.O. | i.O. | i.O. | i.O. |
| Haftvermögen auf | | | | | | |
| PP | i.O. | i.O. | i.O. | i.O. | i.O. | n.i.O. |
| PP/EPDM | i.O. | i.O. | i.O. | i.O. | i.O. | n.i.O. |
| PP - = Polypropylen EPDM - = Ethylen/Propylen-Dienmischpolymerisat i.O. = in Ordnung n.i.O. = nicht in Ordnung | | | | | | |

## Patentansprüche

1. Wäßriges Überzugsmittel auf der Basis eines oder mehrerer wasserverdünnbarer, selbstemulgierender Epoxidharze, das gegebenenfalls Pigmente, Füllstoffe und lackübliche Additive enthält, enthaltend
A) 1 bis 40 Gew.-% eines oder mehrerer wasserverdünnbarer selbstemulgierender Epoxidharze mit einem Epoxidäquivalentgewicht von 250 bis 10000, welche erhältlich sind durch Kondensation von
a) 50 bis 80 Gew.-% einer oder mehrerer Epoxidverbindungen mit im Mittel mindestens 2 Epoxidgruppen pro Molekül und einem Epoxidäquivalentgewicht von 100 bis 2000,
b) 17 bis 35 Gew.-% eines oder mehrerer aromatischer Polyole und
c) 3 bis 15 Gew.-% eines Kondensationsproduktes aus einem oder mehreren aliphatischen Polyolen mit einem gewichtsmittleren Molgewicht (Mw) von 200 bis 20000 und einer oder mehreren Epoxidverbindungen mit im Mittel mindestens 2 Epoxidgruppen pro Molekül und einem Epoxidäquivalentgewicht von 100 bis 2000, wobei das Äquivalentverhältnis der OH-Gruppen zu den Epoxidgruppen 1 : 0,85 bis 1 : 1,5 beträgt und das Epoxidäquivalentgewicht des Kondensationsproduktes bei mindestens 50000 liegt,
B) ein oder mehrere chlorierte Polyolefine (CPO) im Gewichtsverhältnis Epoxidharz (Komponente A): chloriertes Polyolefin (Komponente B) von 10 : 0,5 bis 10 : 4,5, jeweils bezogen auf das Harzfestkörpergewicht,
C) 40 bis 90 Gew.-% Wasser,
D) 3 bis 30 Gew.-% eines oder mehrerer organischer Lösemittel,
wobei sich die Gewichtsprozente von A), C) und D) auf das Gewicht des gesamten Überzugsmittels beziehen und das Überzugsmittel frei von Vernetzern ist.

2. Wäßriges Überzugsmittel nach Anspruch 1, dadurch gekennzeichnet, daß es emulgatorfrei ist.

3. Verwendung der wäßrigen, vernetzerfreien Überzugsmittel nach Anspruch 1 oder 2 zur Beschichtung von Kunststoffsubstraten.

4. Verwendung der wäßrigen, vernetzerfreien Überzugsmittel nach Anspruch 1 oder 2 zur Herstellung von Haftgrundierungen für Reparaturlackierungen.

5. Verwendung der wäßrigen, vernetzerfreien Überzugsmittel nach Anspruch 1 oder 2 zur Herstellung von Haftgrundierungen bei Autoreparaturlackierungen.

6. Verfahren zur Herstellung von Haftgrundierungen für Reparaturlakkierungen, insbesondere von Kunststoffsubstraten, durch Auftrag von wäßrigen Überzugsmitteln und anschließende Trocknung, dadurch gekennzeichnet, daß man ein Überzugsmittel nach Anspruch 1 oder 2 aufträgt und den erhaltenen Überzugsfilm bei Raumtemperatur bis 80°C trocknet.

## Claims

1. Aqueous coating composition which is based on one or more water-dilutable self-emulsifying epoxy resins and comprises, optionally, pigments, fillers and conventional lacquer additives, comprising
A) 1 to 40 wt.% of one or more water-dilutable self-emulsifying epoxy resins having an epoxide equivalent weight of 250 to 10,000, which are obtainable by condensation of
a) 50 to 80 wt.% of one or more epoxide compounds having on average at least 2 epoxide groups per molecule and an epoxide equivalent weight of 100 to 2,000
b) 17 to 35 wt.% of one or more aromatic polyols and
c) 3 to 15 wt.% of a condensation product of one or more aliphatic polyols having a weight-average molecular weight (Mw) of 200 to 20,000 and one or more epoxide compounds having on average at least 2 epoxide groups per molecule and an epoxide equivalent weight of 100 to 2,000, the ratio of equivalents of OH groups to epoxide groups being 1 : 0.85 to 1 : 1.5 and the epoxide equivalent weight of the condensation product being at least 50,000,
B) one or more chlorinated polyolefins (CPO) in a weight ratio of epoxy resin (component A) : chlorinated polyolefin (component B) of 10 : 0.5 to 10 : 4.5, in each case based on the resin solids weight,
C) 40 to 90 wt.% water,
D) 3 to 30 wt.% of one or more organic solvents,
the percentages by weight of A), C) and D) being based on the weight of the total coating composition and the coating composition being free from crosslinking agents.

2. Aqueous coating composition according to claim 1, characterized in that it is free from emulsifiers.

3. Use of the aqueous, crosslinking agent-free coating compositions according to claim 1 or 2 for coating substrates of plastics.

4. Use of the aqueous, crosslinking agent-free coating compositions according to claim 1 or 2 for the preparation of adhesion primers for repair lacquerings.

5. Use of the aqueous, crosslinking agent-free coating compositions according to claim 1 or 2 for the preparation of adhesion primers for car repair lacquerings.

6. Process for the preparation of adhesion primers for repair lacquerings, in particular on substrates of plastics, by application of aqueous coating compositions and subsequent drying, characterized in that a coating composition according to claim 1 or 2 is applied and the resulting coating film is dried at room temperature to 80°C.

## Revendications

1. Produit de revêtement aqueux à base d'une ou plusieurs résines époxydiques auto-émulsionnables, diluables à l'eau, qui contiennent le cas échéant des pigments, des matières de charge et des additifs usuels pour peintures et vernis, ce produit contenant
A) 1 à 40 % en poids d'une ou plusieurs résines époxydiques auto-émulsionnables, diluables à l'eau, à un poids équivalent d'époxyde de 250 à 10 000, qu'on obtient par condensation de
a) 50 à 80 % en poids d'un ou plusieurs composés époxydiques portant en moyenne au moins deux groupes époxydes par molécule et ayant un poids équivalent d'époxyde de 100 à 2000,
b) 17 à 35 % en poids d'un ou plusieurs polyols aromatiques et
c) 3 à 15 % en poids d'un produit de condensation d'un ou plusieurs polyols aliphatiques ayant un poids moléculaire moyen, moyenne en poids, Mw, de 200 à 20 000, et d'un ou plusieurs composés époxydiques portant en moyenne au moins deux groupes époxydes par molécule et ayant un poids équivalent d'époxyde de 100 à 2000, avec un rapport de 1:0,85 à 1:1,5 entre les équivalents de groupes OH et les équivalents de groupes époxydes, le produit de condensation ayant un poids équivalent d'époxyde d'au moins 50 000,
B) une ou plusieurs polyoléfines chlorées, en quantité correspondant à un rapport de 10:0,5 à 10:4,5 en poids entre la résine époxydique du composant A et la polyoléfine chlorée au composant B, dans les deux cas sur les matières solides,
C) 40 à 90 % en poids d'eau,
D) 3 à 30 % en poids d'un ou plusieurs solvants organiques,
les pourcentages en poids de A), C) et D) se rapportant au poids du produit de revêtement total, lequel est exempt d'agents réticulants.

2. Produit de revêtement aqueux selon revendication 1, caractérisé en ce qu'il est exempt d'agents émulsionnants.

3. Utilisation du produit de revêtement aqueux, exempt d'agents réticulants, selon revendication 1 ou 2, pour le revêtement de supports en résines synthétiques.

4. Utilisation du produit de revêtement aqueux, exempt d'agents réticulants, selon revendication 1 ou 2, pour l'application de couches d'adhérence dans des revêtements de réparation.

5. Utilisation du produit de revêtement aqueux, exempt d'agents réticulants, selon revendication 1 ou 2, pour l'application de couches d'adhérence dans des peintures de réparation d'automobiles.

6. Procédé pour l'application de couches d'adhérence dans des peintures de réparation, en particulier de supports de résines synthétiques, par application d'un produit de revêtement aqueux suivie d'un séchage, caractérisé en ce que l'on applique un produit de revêtement selon revendication 1 ou 2 et on sèche la pellicule de revêtement à des températures allant jusqu'à 80°C.
